Europäisches Patentamt

(19) European Patent Office

Office européen des brevets

(11) Publication number: **0 115 367**
**B1**

(12) # EUROPEAN PATENT SPECIFICATION

(45) Date of publication of patent specification: **22.04.87**

(21) Application number: **84200087.9**

(22) Date of filing: **23.01.84**

(51) Int. Cl.⁴: **A 47 J 43/08,** F 16 D 1/10,
B 25 F 3/00

(54) Kitchen machine.

(30) Priority: **28.01.83 NL 8300312**

(43) Date of publication of application:
**08.08.84 Bulletin 84/32**

(45) Publication of the grant of the patent:
**22.04.87 Bulletin 87/17**

(84) Designated Contracting States:
**DE FR GB IT NL**

(56) References cited:
**AT-B- 332 681**
**DE-A-1 425 332**
**DE-A-1 951 420**
**FR-A-1 357 724**
**FR-A-1 396 468**
**FR-A-2 378 485**
**GB-A- 819 863**
**US-A-2 798 700**
**US-A-3 219 373**

**EM & D (Engineering Materials & Design)**
**Product Survey 38, August 1971, page 739,**
**fig.7**

(73) Proprietor: **N.V. Philips' Gloeilampenfabrieken**
**Groenewoudseweg 1**
**NL-5621 BA Eindhoven (NL)**

(72) Inventor: **Boele, Floris**
**c/o INT. OCTROOIBUREAU B.V. Prof. Holstlaan 6**
**NL-5656 AA Eindhoven (NL)**

(74) Representative: **Schrijnemaekers, Hubert**
**Joannes Maria et al**
**Internationaal Octrooibureau B.V. Prof.**
**Holstlaan 6**
**NL-5656 AA Eindhoven (NL)**

Courier Press, Leamington Spa, England.

## Description

The invention relates to a domestic apparatus being provided with a coupling means comprising two parts, one of the coupling parts comprising a shaft provided with at least one coupling lug arranged to co-operate with a groove in a cylindrical member of the other coupling part, the coupling part comprising the shaft being provided with a sleeve which resiliently received the shaft in the axial direction, the shaft at least having one radial projection which is displaceable in a recess provided in the wall of the sleeve. A domestic apparatus as described above is known from DE—A—1951420.

From French Patent Specification 1,396,468, a kitchen machine is known comprising a coffee grinder and a motor unit. The coffee grinder has a coupling part comprising a shaft provided with coupling lugs and rigidly connected to the rotatable chopper of the coffee grinder. The other coupling part is secured to the motor unit and is constructed as a sleeve-shaped member. The cylindrical member is provided at the periphery with inclined abutment surfaces and is provided on the inner side with grooves with which the coupling lugs engage in the coupled condition.

The known domestic apparatus and kitchen machine have the disadvantage that the coupling of the two coupling parts can only be obtained when the two coupling parts are both in line with each other and are in the correct or substantially correct relative positions.

The invention has for its object to modify the domestic apparatus mentioned in the opening paragraph in such a manner that a coupling is obtained by means of which the connection between the motor unit and the domestic apparatus can be established whilst avoiding the said disadvantage.

The domestic apparatus according to the invention is therefore characterized in that the domestic apparatus is a kitchen machine provided with a rotatable tool and a motor unit for driving the rotatable tool, both the kitchen machine and the motor unit being provided each with one part of said coupling means and in that the recess provided in the wall of the sleeve is a helical one, such that pressure on the shaft during the coupling operation causes it to rotate due to displacement of the at least one radial projection in the helical recess until the at least one coupling lug on the shaft is aligned with the groove in the cylindrical member of the other coupling part.

The domestic apparatus according to the invention has a coupling by means of which the connection between the motor unit and the apparatus can be established in a simple manner. For this purpose, the two coupling parts need only to be axially pressed against each other. The shaft then slides into the sleeve whilst rotating simultaneously due to the radial projection in the helical recess until the coupling lug can engage with a groove in the sleeve-shaped member.

An advantage of the apparatus according to the invention is that the coupling between the motor unit and the kitchen machine, such as a vegetable grater or a fruit squeezer, can be established in any position in which the two coupling parts are in line with each other. For this purpose, the two parts need only be pressed against each other without the necessity of bringing the coupling lug into a position opposite a groove in the sleeve-shaped member.

An embodiment of the domestic apparatus is characterized in that the coupling lug is provided with at least one inclined alignment surface. An advantage of this construction is that the force with which the coupling has to be established is smaller.

Another embodiment of the domestic apparatus is characterized in that a helical spring resiliently supporting the shaft is arranged in the sleeve.

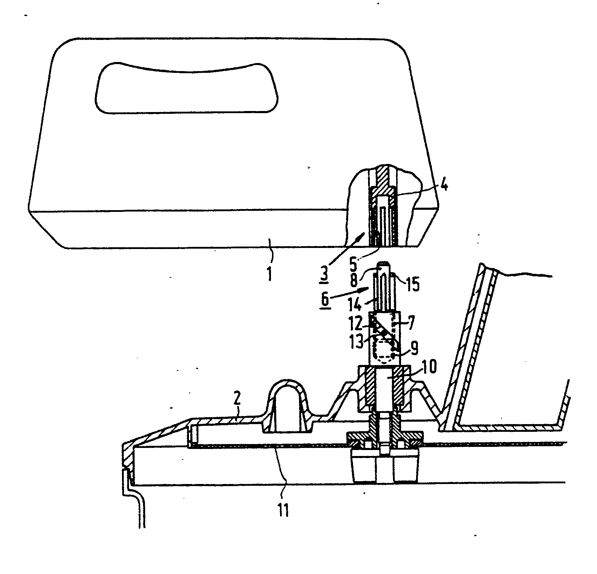

The invention will be described more fully with reference to the drawing, in which the Figure shows partly in side elevation and partly in sectional view an embodiment of the kitchen machine according to the invention in the decoupled condition.

In the Figure, the kitchen machine according to the invention comprises a hand mixer 1 serving as a motor unit and a vegetable grater 2. The coupling part 3 is included in the mixer 1 and connected to the electric motor present therein. The coupling part 3 comprises a cylindrical or sleeve-shaped member 4 whose inner wall is provided in this embodiment with four equidistantly extending radial grooves 5.

The coupling part 6, which forms part of a vegetable grater 2, comprises a sleeve 7 and a round shaft 8 which is displaceable in the sleeve 7 and bears on a helical spring 9 present in the sleeve 7. The sleeve 7 is coupled by means of a connection shaft 10 to a rotatable knife 11.

In this embodiment, the wall of the sleeve 7 is provided with two helical recesses 12 which are arranged diametrically to each other. In the Figure, only one recess 12 is shown. A radial projection 13 is passed into each recess 12 and this projection is constituted by a pin passed into the shaft 8.

The shaft 8 further has four coupling lugs 14 whose positions and dimensions are adapted to the grooves 5 in the coupling part 3. The coupling lugs 14 are each provided with inclined alignment surfaces 15.

In order to establish the connection between the mixer 1 and the vegetable grater 2, the two coupling parts 3 and 6 are arranged against each other, whereby it need only be ensured that the shaft 8 and the cylindrical member 4 are in line with each other. If then the mixer 1 is pressed on the vegetable grater 2, the shaft 8 will be passed further into the sleeve 7 when the connection is not established immediately. The coupling lugs 14 then reach a correct position with respect to the grooves 5 due to the occurring rotation of the shaft 8. The coupling lugs 14 are then passed into the grooves 5, which results in that the coupling is established.

The invention is not limited to the embodiment shown in the drawing. Especially, the invention also comprises embodiments in which the coupling part 3 forms part of the domestic apparatus and the coupling part 6 forms part of the motor unit 1.

## Claims

1. A domestic apparatus provided with a coupling means comprising two parts (3, 6), one of the coupling parts (6) comprising a shaft (8) provided with at least one coupling lug (14) arranged to cooperate with a groove (5) in a cylindrical member (4) of the other coupling part (3), the coupling part (6) comprising the shaft (8) being provided with a sleeve (7) which resiliently receives the shaft (8) in the axial direction, the shaft (8) at least having one radial projection (13) which is displaceable in a recess provided in the wall of the sleeve, characterized in that the domestic apparatus is a kitchen machine (2) provided with a rotatable tool (11) and a motor unit (1) for driving the rotatable tool (11), both the kitchen machine (2) and the motor unit (1) being provided each with one part of said coupling means and in that the recess (12) provided in the wall of the sleeve is a helical one, such that pressure on the shaft (8) during the coupling operation causes it to rotate due to displacement of the at least one radial projection (13) in the helical recess (12) until the at least one coupling lug (14) on the shaft (8) is aligned with the groove (5) in the cylindrical member of the other coupling part.

2. A domestic apparatus as claimed in Claim 1, characterized in that the coupling lug (14) is provided with at least one inclined alignment surface (15).

3. A domestic apparatus as claimed in claim 1 or 2, characterized in that a helical spring (9) resiliently supporting the shaft (8) is arranged in the sleeve (7).

4. A domestic apparatus as claimed in any one of the preceding Claims, characterized in that the motor unit is constituted by a hand mixer.

## Patentansprüche

1. Haushaltsgerät mit Kupplungsmitteln, die zwei Teile (3, 6) aufweisen, wobei einer der Kupplungsteile (6) eine Achse (8) aufweist, die mit wenigstens einem Kupplungsnocken (14) versehen ist, der dazu vorgesehen ist, mit einer Nut (5) in einem zylinderförmigen Element (4) des anderen Kupplungsteils (3) zusammenzuarbeiten, wobei der Kupplungsteil (6) mit der Achse (8) mit einer Büchse (7) versehen ist, welche die Achse (8) in der axialen Richtung federnd aufnimmt, wobei die Achse (8) wenigstens einen radialen Vorsprung (13) aufweist, der in einer in der Wand der Büchse vorgesehenen Ausnehmung verschiebbar ist, dadurch gekennzeichnet, dass das Haushaltsgerät eine Küchenmaschine (2) ist, die mit einem drehbaren Werkzeug (11) und einer Motoreinheit (1) zum Antreiben des drehbaren Werkzeugs (11) versehen ist, wobei die Küchenmaschine (2) und die Motoreinheit (1) mit je einem Teil der genannten Kupplungsmittel versehen sind und dass die Ausnehmung (12) in der Wand der Büchse schraubenlinienförmig ist, so dass auf die Achse (8) ausgeübter Druck beim Kuppeln die Achse drehen lässt und zwar wegen der Verschiebung des wenigstens einen radialen Vorsprungs (13) in der schraubenlinienförmigen Ausnehmung (12) bis der wenigstens eine Kupplungsnocken (14) auf der Achse (8) mit der Nut (5) in dem zylinderförmigen Element des anderen Kupplungsteils fluchtend liegt.

2. Haushaltsgerät nach Anspruch 1, dadurch gekennzeichnet, dass der Kupplungsnocken (14) mit wenigstens einer schrägen Suchfläche (15) versehen ist.

3. Haushaltsgerät nach Anspruch 1 oder 2, dadurch gekennzeichnet, dass in der Büchse (7) eine die Achse (8) federnd unterstützende Schraubenfeder (9) angeordnet ist.

4. Haushaltsgerät nach einem der vorstehenden Ansprüche, dadurch gekennzeichnet, dass die Motoreinheit durch einen Handmischer gebildet wird.

## Revendications

1. Appareil électroménager muni de moyens de couplage comportant deux parties (3, 6), une de ces parties, notamment la partie (6), comprenant un arbre (8) muni d'au moins une came de couplage (14) capable de coopérer avec une rainure (5) pratiquée dans un élément cylindrique (4) de la partie de couplage (3), alors que la partie de couplage (6) comprenant l'arbre (8) est munie d'une douille (7) dans laquelle se loge de manière élastique ledit arbre (8) dans la direction axiale, tandis que cet arbre (8) a au moins une saillie radiale (13) qui est déplaçable dans un évidement prévu dans la paroi de la douille, caractérisé en ce que l'appareil électroménager est un robot culinaire (2) muni d'un outil rotatif (11) est d'une unité de moteur (1) pour mettre en mouvement cet outil (11), alors que tant le robot culinaire (2) que l'unité de moteur (1) comportent une partie desdits moyens de couplage, et que l'évidement (12) prévu dans la paroi de la douille est hélicoïdal, de sorte qu'une pression sur l'arbre (8) au cours de l'opération de couplage conduit à la rotation de l'arbre à cause du déplacement d'au moins ladite saillie radiale (13) dans l'evidement hélicoîdal (12) jusqu'à ce qu'au moins une came de couplage (14) sur l'arbre (8) se trouve dans le prolongement de la rainure (5) dans l'élément cylindrique de l'autre partie de couplage.

2. Appareil électroménager selon la revendication 1, caractérisé en ce que la came de couplage (14) est munie d'au moins une face de recherche d'alignement (15).

3. Appareil électroménager selon la revendication 1 ou 2, caractérisé en ce que la douille (7) contient un ressort hélicoïdal (9) qui supporte élastiquement l'arbre (8).

4. Appareil électroménager selon l'une quelconque des revendications précédentes, caractérisé en ce que l'unité de moteur est formée par un mixeur manuel.